# EUROPEAN PATENT APPLICATION

(11) **EP 1 352 734 A2**
(43) Date of publication of application: **15.10.2003**
(21) Application number: 03004256.8
(22) Date of filing: 26.02.2003
(51) Int. Cl.: B29C 65/56, H01G 9/00

(54) **Method for closing hermetically the plastic housing of a capacitor, and capacitor obtained with the method**

(30) Priority: 11.04.2002 IT BO20020192
(71) Applicant: ITALFARAD S.p.A., 40061 Minerbio (Province of Bologna) (IT)
(72) Inventor: Marino, Paolo, 40055 Castenaso, (Prov. of Bologna) (IT)
(74) Representative: Modiano, Guido, Dr.-Ing.

(57) **Abstract**

A method for closing hermetically the housing (1) of a capacitor, particularly a capacitor provided with an overpressure device, the housing being composed of a cylindrical container (2) and a cover (3), both made of plastics, comprising the steps of : providing an annular shoulder (13) inside the container (2) at a distance from the edge of the container that is greater than the thickness of the peripheral region of the cover; placing the cover (3) inside the container (2) so that it rests on the annular shoulder (13), so that the edge of the container protrudes above the peripheral region of the cover with an annular portion; and bending, while applying heat, the annular portion over the peripheral region of the cover so as to provide a lip (15) that is adapted to retain hermetically the cover between the lip (15) and the shoulder (13).

## Description

The present invention relates to a method for closing hermetically the plastic housing of a capacitor, particularly but not exclusively of a capacitor provided with an overpressure device. The invention also relates to a capacitor, particularly of the type with overpressure device, manufactured with such closure method.

Capacitors, particularly of the type with overpressure device, are known which have a device for protection against explosions that occur when, for example due to a short-circuit, gas is generated inside the capacitive element, causing a gradual increase in pressure inside the capacitor. These protection devices are built so as to interrupt the electrical connection of the capacitor when the pressure reaches a preset value, clearly lower than the explosion pressure. For this purpose, the capacitive element is connected to contacts that are mounted on a portion of the housing which, due to the increase in pressure inside the capacitor, undergoes deformation, moving away from the capacitive element so as to interrupt the electrical connection to the power supply.

In known capacitors, the housing is constituted by a container, which is usually cylindrical and contains the capacitive element, and by a cover, on which the contacts for electrical connection of the capacitor are normally mounted. Several solutions are known for providing the spacing between the capacitive element and the contacts that is necessary to cause the interruption of the electrical connection.

In a first solution, in which the housing is entirely made of metal, the cover is associated with the container by perimetric seaming, which ensures the necessary hermetic seal of the housing. The deformable portion is provided on the cover, and the contacts of the electrical power supply are mounted thereon, so that if the internal pressure increases, the deformation of the cover breaks the connections to the capacitive element.

In a second type of capacitor, the housing is composed of a metal container and of a plastic cover, which is retained peripherally, with a sealing gasket interposed, in a slot of the container that is formed between an annular lip, obtained by folding inward the edge of the container, and a protrusion, which is obtained by forming an annular fold in the wall of said container. The annular fold constitutes the deformable part that in case of overpressure allows the container to elongate and move the cover with the contacts mounted thereon away from the capacitive element until the electric circuit is interrupted. This type of capacitor has the important disadvantage of requiring an additional sealing gasket, which increases the difficulty of the step for closing the housing.

In another type of capacitor, the housing is composed of a container and a cover, both made of plastics. The cover is guided hermetically inside the container and abuts hermetically against an annular shoulder, which is constituted by a ring that is welded to the edge of the container or is recessed in a groove inside the container. This capacitor, too, is difficult to manufacture owing to the technical difficulties in welding the shoulder ring and in forming the groove, which, by constituting an undercut, requires particular solutions in order to allow extraction of the container from the mold.

The aim of the present invention is therefore to provide a method that allows to produce a capacitor without encountering the shortcomings of known methods, by providing a capacitor with a housing made entirely of plastics without resorting to additional elements for hermetic closure, so that assembly is simplified and costs are reduced.

This aim is achieved with a method for closing hermetically the housing of a capacitor, particularly a capacitor provided with an overpressure device, said housing being composed of a cylindrical container and a cover, both made of plastics, characterized in that it comprises the steps of: providing an annular shoulder inside the container at a distance from the edge of said container that is greater than the thickness of the peripheral region of the cover; placing said cover inside said container so that it rests on said annular shoulder, so that the edge of said container protrudes above the peripheral region of said cover with an annular portion; and bending, while applying heat, said annular portion over the peripheral region of said cover so as to provide a lip that is adapted to retain hermetically said cover between said lip and said shoulder.

Within this aim, an object of the present invention is to provide a capacitor obtained with the method defined above that is capable of ensuring perfectly hermetic closure of the housing for containing the capacitive element.

Further features and advantages of the present invention will become better apparent from the following description of an embodiment of the capacitor and of the method, illustrated by way of non-limitative example in the accompanying drawings, wherein:
Figure 1 is a sectional view of the capacitor according to the invention in a first step of the manufacturing process;
Figure 2 is a sectional view of the capacitor in a second step of the method;
Figure 3 is a sectional view of the finished capacitor;
Figure 4 is a sectional view of the capacitor after it has been activated in an overpressure position.

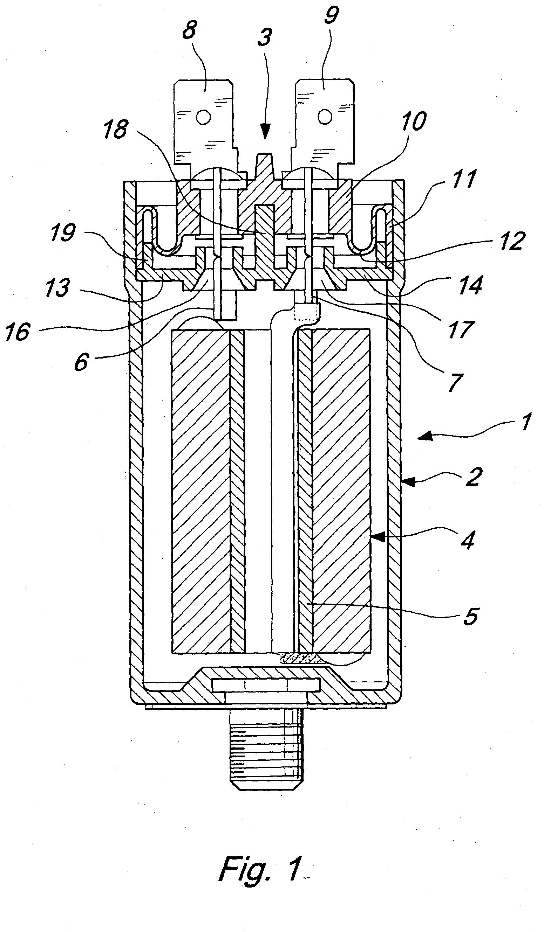

The capacitor with overpressure device obtained with the method according to the invention is described with reference to Figures 1-3.

Such capacitor comprises a housing 1, which is composed of a cylindrical container 2 and a cover 3, both of which are made of plastics.

A capacitive element 4 is arranged inside the container 2 and is constituted by two plates made of metallized plastic film, wound on a spool 5. Two cables are connected to the plates and are connected, by means of two bare portions 6, 7, to two contacts 8, 9 mounted on the cover 3.

The cover 3 is composed of a central block 10, on which the contacts 8, 9 are fixed and from which a perimetric portion protrudes; the perimetric portion comprises a substantially cylindrical collar 11, which is connected to the central block 10 by an annular fold 12. The fold 12 has a U-shaped or V-shaped cross-section, so as to connect to the central block 10 on one side and to the collar 11 on the other side and form an annular cavity that is open upward.

The cover 3 is inserted in the upper portion of the container 2, which is conveniently wider than the remaining portion so as to form an internal step 13, which acts as a shoulder for supporting a disk 14, which is interposed between the cover 3 and the top of the capacitive element 4. The annular fold 12 applies a certain radial thrust to the collar 11 that keeps it in contact with the internal wall of the container 2.

The collar 11 rests on the peripheral region of the disk 14 and is retained axially by an annular lip 15, which is obtained by folding inward the end portion or edge of the container 2.

The disk 14 is provided with two openings 16, 17, through which the conductors 6, 7 pass in order to connect to the contacts 8, 9; with a central rib 18 for supporting the cover 3; and with a perimetric rib 19, which remains spaced from the inner wall of the container so as to delimit an annular slot in which the collar 11 is inserted hermetically.

The method for closing the housing of the capacitor 1 comprises a first step, shown in Figure 1, in which the disk 14 and the cover 3 are inserted in the container 2 until abutment against the shoulder step 13 occurs. Since the portion of the container 2 that lies between the step 13 and the free edge of the container is longer than the collar 11, the edge of the container protrudes from the collar.

In a subsequent step of the method, the protruding edge of the container is folded inward by means of a rotating tool 20, forming the annular lip 15 that retains the disk 14 and the collar 11 inside the container.

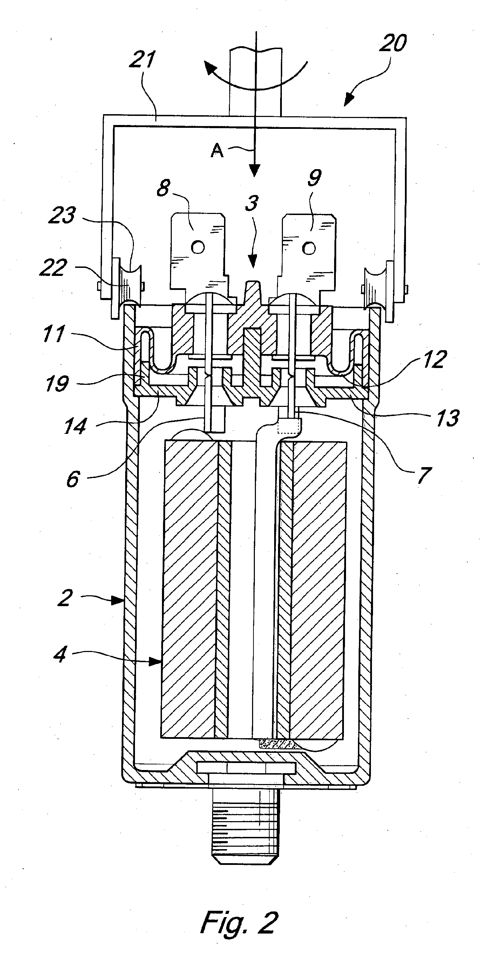

As shown in Figure 2, the tool 20 is constituted by a rotating support 21, which has a rotation axis A that is coaxial to the axis of symmetry of the capacitor. The tool 20, besides being rotatable, is also capable of performing axial movements.

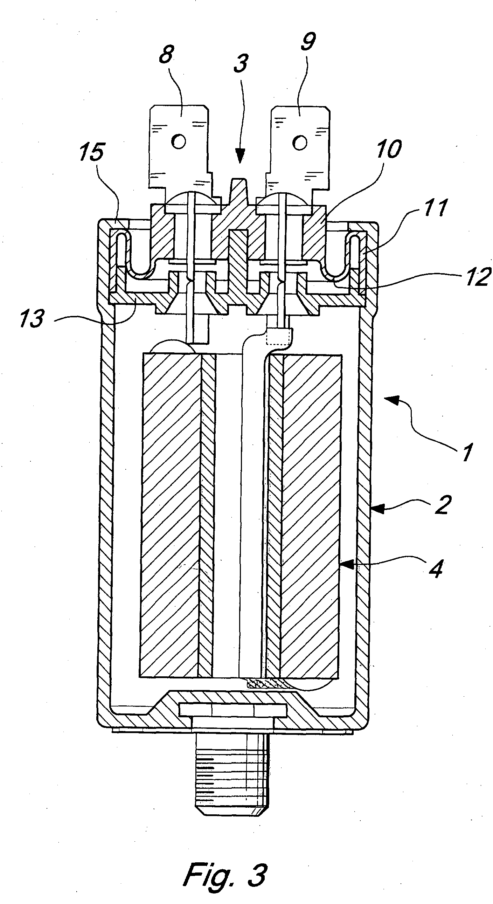

Rollers 22 are mounted on the rotating support 21 and have a peripheral groove 23, which is shaped so that when they are pressed against the edge of the container they generate an inward thrust, which bends and turns the edge of the container over onto the collar 11 of the cover, forming the lip 15. It should be noted that the heat generated by the friction with which the rollers 22 roll over the edge of the container facilitates the deformation of the wall of the container, allowing the formed lip 15 to adhere hermetically to the collar 11 without having to resort to interposing sealing gaskets and providing a solid locking of the collar (see Figure 3).

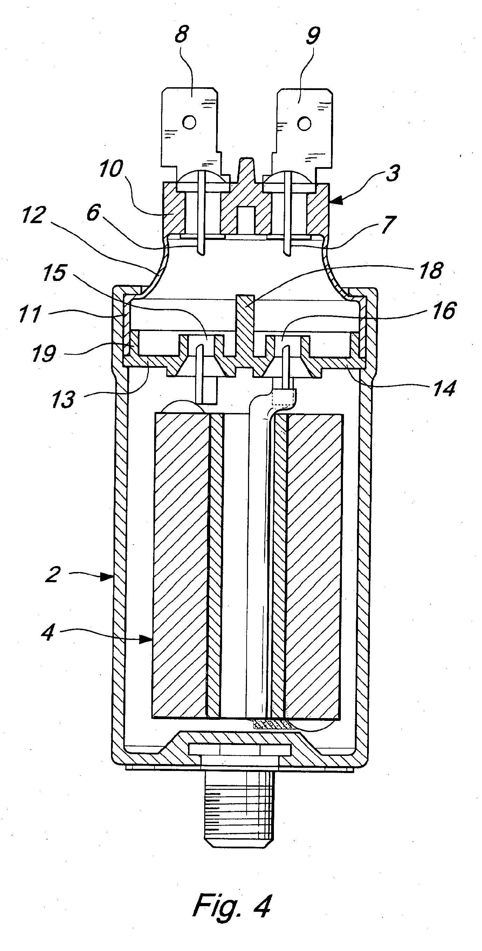

The retention of the cover remains in any case limited only to the collar 11, while the fold 12 remains free. Accordingly, the fold 12, if the pressure inside the capacitor increases, can flex outward, allowing the central body 3 to expand in order to break the conductors 6, 7 and interrupt the electrical connection (see Figure 4).

It is evident that the described invention is susceptible of numerous modifications and variations, all of which are within the scope of the same inventive concept. For example, the heat for deforming the lip 15 can be applied by means of an external heater rather than by friction of the tool 20 on the edge of the container.

The disclosures in Italian Patent Application No. BO2002A000192 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for closing hermetically the housing (1) of a capacitor, particularly a capacitor provided with an overpressure device, said housing being composed of a cylindrical container (2) and a cover (3), both made of plastics, **characterized in that** it comprises the steps of : providing an annular shoulder (13) inside the container (2) at a distance from the edge of said container that is greater than the thickness of the peripheral region of the cover; placing said cover (3) inside said container (2) so that it rests on said annular shoulder (13), so that the edge of said container protrudes above the peripheral region of said cover; and bending, while applying heat, said edge onto the peripheral region of said cover so as to provide a lip (15) that is adapted to retain hermetically said cover between said lip (15) and said shoulder (13).

2. The method according to claim 1, **characterized in that** said edge is folded onto the cover with a rotating tool that is adapted to heat said edge by friction.

3. The method according to claim 1, **characterized in that** said edge is folded onto the cover by means of a rotating tool after external heating.

4. The method according to one of the preceding claims, **characterized in that** said cover (3) is inserted by pressing in said container (2) until it abuts against said annular shoulder (13).

5. The method according to claim 4, **characterized in that** a disk (14) is interposed beforehand between said shoulder (13) and said cover (3).

6. A capacitor produced with a method according to claim 1, comprising a housing (1) for containing the capacitive element (4) that is composed of a cylindrical container (2) and of a plastic cover (3) on which electrical contacts (8, 9) are mounted for the electrical connection of the capacitive element (4) to the power supply, **characterized in that** it comprises an annular shoulder (13) inside the container that lies at a distance from the edge of said container that is greater than the thickness of the peripheral region of the cover (3) and acts as support for said cover, and a lip (15) that protrudes from said edge inward in order to retain hermetically said cover (3), said lip (15) being formed by folding the edge of said container.

7. The capacitor according to claim 6, **characterized in that** said cover (3) is composed of a central block (10), on which said electrical contacts (8,9) are fixed and from which a perimetric portion extends, said perimetric portion comprising a substantially cylindrical collar (11), which is connected to said central block by an annular fold (12), which has a substantially U-shaped or V-shaped cross-section so as to connect on one side to said block (10) and on the other side to said collar (11), thus forming an annular cavity that is open upward.

8. The capacitor according to claim 7, **characterized in that** a disk (14) is interposed between said cover (3) and said shoulder (13) and has two openings (16, 17) through which the conductors (6,7) pass for the connection of said capacitive element (4) to said electrical contacts (8, 9), a central supporting rib (18) for said central block (3), and a perimetric rib (19), which remains spaced from the internal wall of the container (2) so as to delimit an annular groove in which said collar (11) is inserted hermetically.
